# EUROPEAN PATENT APPLICATION

(11) **EP 3 739 734 A1**
(43) Date of publication of application: **18.11.2020**
(21) Application number: 18899227.5
(22) Date of filing: 02.11.2018
(51) Int. Cl.: H02K 17/16

(54) **INDUCTION MOTOR**

(30) Priority: 11.01.2018 JP 2018002700
(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: MISU, Daisuke, Tokyo 105-0023 (JP); KOYAMA, Taihei, Tokyo 105-0023 (JP); MATSUSHITA, Makoto, Tokyo 105-0023 (JP); HASEBE, Toshio, Kawasaki-shi, Kanagawa 212-0013 (JP)
(74) Representative: AWA Sweden AB
(86) International application number: PCT/JP2018/040820
(87) International publication number: WO 2019/138666

(57) **Abstract**

To provide an induction motor in which noise caused by rotation of a rotor is reduced. An induction motor according to an embodiment includes a stator for generating a magnetic field and a rotor driven by the magnetic field from the stator. The rotor includes a core provided on a rotating shaft. A plurality of conductive bars are inserted into a plurality of slots provided in the core. A first ring is connected to one ends of the conductive bars. A second ring is connected to the other ends of the conductive bars. Gaps are formed between the core and the first ring and between the core and the second ring. The conductive bars are connected to the first or second ring across the gaps from the slots. A section of each conductive bar perpendicular to a longitudinal direction thereof is a polygon having a first surface located on the outer circumference side of the rotor, a second surface located on the inner circumference side of the rotor, a plurality of side surfaces located between the first surface and the second surface, and inclined surfaces that are located between the first surface and the side surfaces at least in the gaps and are inclined with respect to the first surface and the side surfaces.

## Description

### Field

The embodiments of the present invention relate to an induction motor.

### Background

A so-called squirrel-cage induction motor is one of known induction motors. The squirrel-cage induction motor is configured by a stator in which a stator coil is arranged around a substantially cylindrical stator core and a rotor provided radially inward of the stator to be rotatable with respect to the stator.

The rotor has a core fixed to a rotating shaft. A plurality of teeth extending in a radial direction are arranged on the core radially. A slot is formed between circumferentially adjacent teeth. A conductive bar is inserted in the slot. The conductive bars are mutually connected at ends in an axial direction of the rotor core by a shorting ring.

Generally, a gap is provided between the end of the core and the shorting ring in order to weld the conductive bar and the shorting ring to each other. However, the conductive bar is exposed in this gap and therefore, because of rotation of the rotor, wind noise in association with the rotation is generated around the conductive bar itself or in a space between adjacent conductive bars. This wind noise results in increase of noise of the induction motor.

### Citation List

### Patent Literature

[Patent Literature 1] Japanese Patent Application Laid-open No. 2008-278642

Summary

### Technical Problem

An object of the invention is to provide an induction motor in which noise caused by rotation of a rotor is reduced.

### Solution to Problem

An induction motor according to an embodiment comprises a stator for generating a magnetic field and a rotor driven by the magnetic field from the stator. The rotor includes a core provided on a rotating shaft. A plurality of conductive bars are inserted into a plurality of slots provided in the core. A first ring is connected to one ends of the conductive bars. A second ring is connected to the other ends of the conductive bars. Gaps are formed between the core and the first ring and between the core and the second ring. The conductive bars are connected to the first or second ring across the gaps from the slots. A section of each conductive bar perpendicular to a longitudinal direction thereof is a polygon having a first surface located on the outer circumference side of the rotor, a second surface located on the inner circumference side of the rotor, a plurality of side surfaces located between the first surface and the second surface, and inclined surfaces that are located between the first surface and the side surfaces at least in the gaps and are inclined with respect to the first surface and the side surfaces. The inclined surfaces are inclined with respect to the first surface at an angle of 10 degrees to 40 degrees. A width of each inclined surface in a direction parallel to the first surface is equal to or less than a width from a slot opening that is provided in an outer circumference side of the core and communicates with one of the slots to a corner of the slot in the direction parallel to the first surface.

### Brief Description of Drawings

[FIG. 1] FIG. 1 is a cross-sectional view illustrating a configuration example of an induction motor according to a first embodiment.
[FIG. 2] FIG. 2 is a perspective view illustrating a configuration example of a rotor.
[FIG. 3] FIG. 3 is a side view illustrating a configuration example of a rotor core.
[FIG. 4] FIG. 4 is a diagram illustrating a portion of a section of the rotor perpendicular to an axial direction.
[FIG. 5] FIG. 5 is a cross-sectional view illustrating a configuration example of a conductive bar 30 according to the first embodiment.
[FIG. 6] FIG. 6 is a perspective view illustrating a configuration example of one end of the conductive bar 30.
[FIG. 7] FIG. 7 is a graph illustrating a relation between an inclination angle of an inclined surface 31 and wind noise caused by rotation of the rotor 3.
[FIG. 8] FIG. 8 is a cross-sectional view illustrating a configuration example of the conductive bar 30 according to a second embodiment.
[FIG. 9] FIG. 9 is a perspective view illustrating a configuration example of one end of the conductive bar 30 according to the second embodiment.
[FIG. 10] FIG. 10 is a cross-sectional view illustrating a configuration example of the conductive bar 30 and a slot S according to a third embodiment.

### Description of Embodiments

Embodiments of the present invention will be described below in detail with reference to the accompanying drawings. These embodiments do not limit the present invention. The drawings are schematic or conceptual and the ratio of respective parts and the like are not necessarily the same as those of real products. In the specification and the drawings, constituent elements identical to those described with respect to the drawings that have been already described are denoted by like reference signs, and detailed explanations thereof are appropriately omitted.

### (First embodiment)

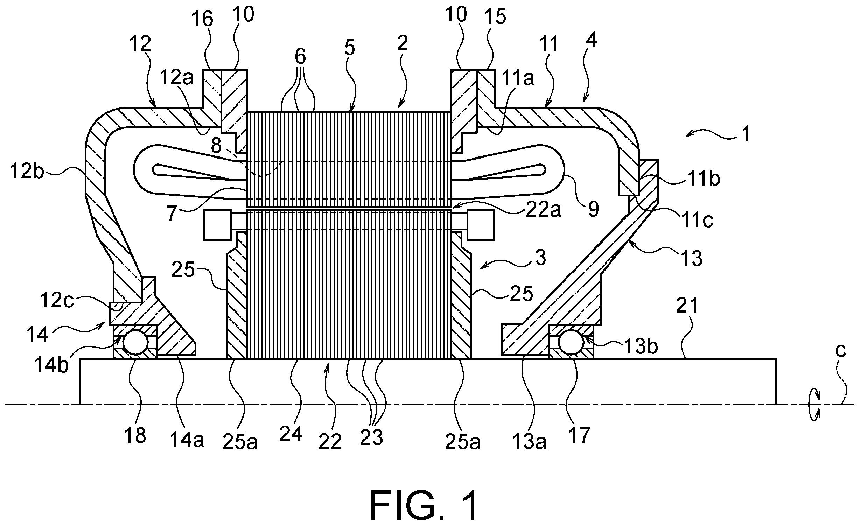

FIG. 1 is a cross-sectional view illustrating a configuration example of an induction motor 1 according to a first embodiment. FIG. 1 only illustrates a configuration of one side half of the induction motor 1 along a center axis C. The induction motor 1 is, for example, a motor used for driving a railroad vehicle (not illustrated).

The induction motor 1 includes a stator 2, a rotor 3 provided to be rotatable with respect to the stator 2, and a casing 4 that supports the stator 2 and the rotor 3. The stator 2 is fixed to the casing 4. The rotor 3 is configured to be rotatable about the center axis C with respect to the stator 2. In the induction motor 1, a current is supplied to the stator (a primary side) 2, and an induced current is generated in the rotor (a secondary conductor) 3 by a magnetic field generated by the stator 2. The rotor obtains rotational torque by the magnetic field from the stator, thereby being driven to rotate.

In the following descriptions, a direction along the center axis C and a direction rotating around the center axis C are simply referred to as "axial direction" and "circumferential direction (a rotating direction)", respectively, and a direction perpendicular to the axial direction and the circumferential direction is referred to as "radial direction (radiation direction)".

The stator 2 includes a substantially cylindrical stator core 5. The stator core 5 is a stack of a plurality of electromagnetic steel sheets 6 stacked along the axial direction. The electromagnetic steel sheets 6 are thin steel sheets manufactured by adding silicon to iron, for example.

A plurality of stator teeth 7 are provided on an inner circumferential surface of the stator core 5 to project toward the center axis C. The stator teeth 7 are arranged in the circumferential direction substantially equidistantly. A stator slot 8 is provided between the circumferentially adjacent stator teeth 7. A stator coil 9 is wound around each stator tooth 7 via the corresponding stator slots 8. The stator coil 9 is provided to overhang from both ends in the axial direction of the stator core 5 toward outside in the axial direction. Direct-current power, for example, supplied from an overhead wire via a pantograph (both not illustrated) is supplied to this stator coil 9 after being converted to alternating-current power.

Stator core clampers 10 are provided at both the ends in the axial direction of the stator core 5. The stator core clampers 10 clamp and hold the electromagnetic steel sheets 6 that are stacked to configure the stator core 5 from both ends in the axial direction to prevent the electromagnetic steel sheets 6 from being separated from each other. The stator core clampers 10 are formed of metal, such as iron, to be substantially annular, and the outer diameter thereof is set to be larger than the outer diameter of the stator core 5. Further, the inner diameter of the stator core clampers 10 is set to prevent the stator core clampers 10 and the stator coil 9 from coming into contact with each other. The stator core 5 and the stator core clampers 10 are integrated with each other by welding or the like.

The casing 4 is configured by a pair of tubular mirror lids 11 and 12 arranged on both sides in the axial direction of the stator 2 and a pair of bearing brackets 13 and 14 respectively integrated with the mirror lids 11 and 12. The mirror lids 11 and 12 are arranged in such a manner that their openings 11a and 12a face the stator core 5. Further, outer flange portions 15 and 16 are formed on outer peripheral edges of the openings 11a and 12a of the mirror lids 11 and 12, respectively.

The outer diameter of the outer flange portions 15 and 16 is set to be substantially the same as the outer diameter of the stator core clampers 10. Accordingly, the stator core clampers 10 and the outer flange portions 15 and 16 of the mirror lids 11 and 12 overlap each other in the axial direction. Each stator core clamper 10 and a corresponding one of the outer flange portions 15 and 16 of the mirror lids 11 and 12 are fastened and fixed to each other by a bolt and a nut (not illustrated). Accordingly, the stator 2 is supported by the mirror lids 11 and 12.

Openings 11c and 12c are formed in center portions in the radial direction of bottoms 11b and 12b of the mirror lids 11 and 12, respectively. To close the openings 11c and 12c, the corresponding bearing brackets 13 and 14 are provided. The bearing brackets 13 and 14 are integrated with the corresponding mirror lids 11 and 12 with each other, respectively.

Each of the bearing brackets 13 and 14 is formed to be substantially frustoconical and is arranged to project toward the stator 2. Insertion holes 13a and 14a that allow a rotating shaft 21 to be inserted therethrough penetrate through center portions in the radial direction of the bearing brackets 13 and 14 along the axial direction. Further, bearing accommodating portions 13b and 14b are provided to be concave in the center portions in the radial direction of the bearing brackets 13 and 14 in outer portions in the axial direction, respectively. Bearings 17 and 18 are provided in the respective bearing accommodating portions 13b and 14b. The rotating shaft 21 is supported by the bearing brackets 13 and 14 via the bearings 17 and 18 to be rotatable. The casing 4 is fixed under the floor of a railroad vehicle (both not illustrated), for example.

The rotor 3 has the rotating shaft 21 that is supported to be rotatable about the center axis C. A rotor core 22 (hereinafter, also simply "core 22") that is substantially cylindrical is externally fitted and fixed onto the rotating shaft 21. The outer diameter of the core 22 is set to allow a small gap to be formed between an outer circumferential surface 22a of the core 22 and the stator teeth 7 of the stator 2. The core 22 is also formed by stacking a plurality of electromagnetic steel sheets 23 in the axial direction. A through hole 24 is provided at the center in the radial direction of the core 22. The rotating shaft 21 penetrates through the through hole 24 over the axial direction and rotates about the center axis C together with the core 22 as one unit. In a case where the rotating shaft 21 is inserted into the core 22, the core 22 and the rotating shaft 21 are integrated with each other by press fitting, shrink fitting, or the like.

Rotor core clampers 25 (hereinafter, also simply "core clampers 25") that are substantially disk-shaped are provided at both ends in the axial direction of the core 22. The core clamper 25 is also formed of metal, such as iron, and has a through hole 25a formed at its center in the radial direction. The rotating shaft 21 penetrates through the through hole 25a over the axial direction and rotates about the center axis C together with the core 22 as one unit. The core clampers 25 have a role of holding the electromagnetic steel sheets 23 that are stacked to configure the core 22 to prevent the electromagnetic steel sheets 23 from being separated from each other and being displaced in the axial direction with respect to the rotating shaft 21.

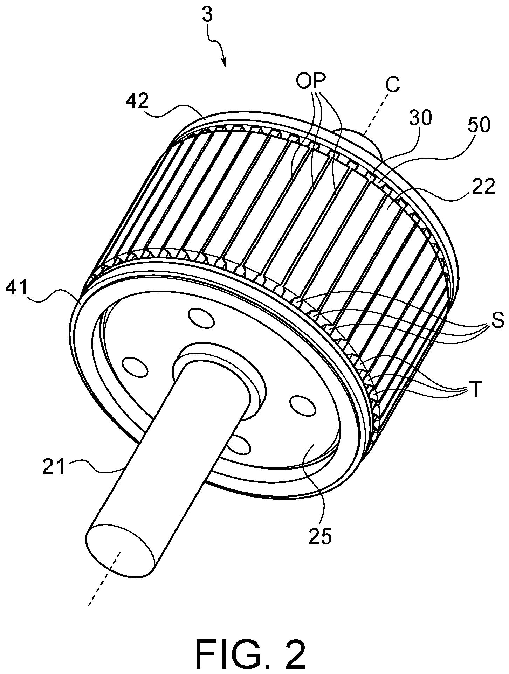

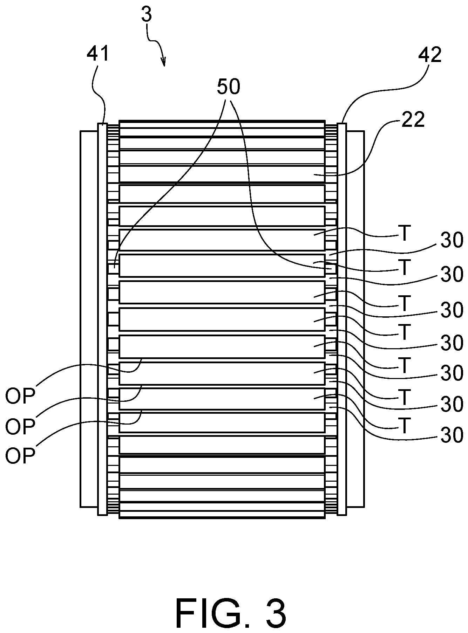

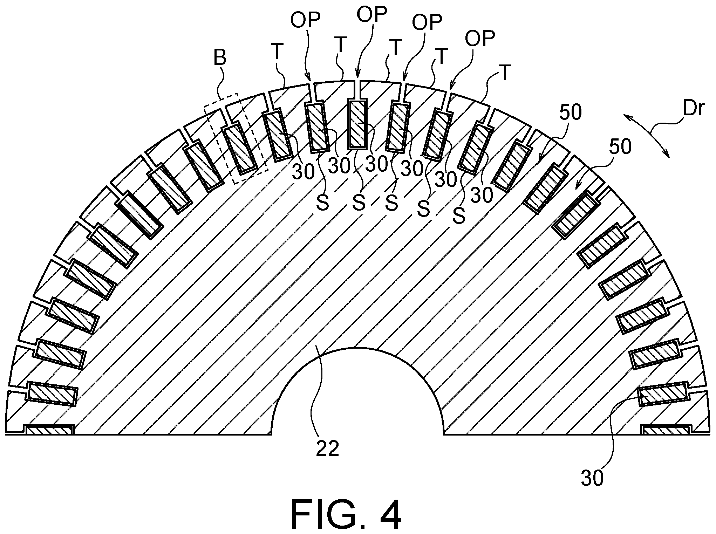

FIG. 2 is a perspective view illustrating a configuration example of the rotor 3. FIG. 3 is a side view illustrating a configuration example of the core 22. FIG. 4 is a diagram illustrating a portion of a section of the rotor 3 perpendicular to the axial direction.

The rotor 3 includes the rotating shaft 21, the core 22, conductive bars 30, a first shorting ring 41, a second shorting ring 42, and the core clampers 25.

The rotating shaft 21 has an elongate shape along the center axis C as illustrated in FIG. 2, and can rotate about the center axis C. The core 22 is fixed to the rotating shaft 21 and has a plurality of teeth T projecting radially outward. As illustrated in FIG. 4, a slot S is provided between the teeth T that are adjacent to each other in the circumferential direction Dr. The teeth T are aligned in a circumferential direction substantially equidistantly. Circumferential widths between the teeth T are substantially equal to each other. Therefore, in association with the alignment of the teeth T, the slots S are also aligned in the circumferential direction substantially equidistantly, and their circumferential widths are also substantially equal to each other. As illustrated in FIGS. 2 and 3, each slot S is a space that extends in the axial direction between the teeth T and allows the conductive bar 30 to be inserted thereinto. Further, as illustrated in FIG. 4, each slot S communicates with a slot opening OP provided on the outer circumference of the core 22. The width in the circumferential direction Dr of the slot opening OP is narrower than the circumferential width of the slot S, so that the conductive bar 30 is prevented from falling out of the slot opening OP. As illustrated in FIGS. 2 and 3, the core clampers 25 are provided at both ends in the axial direction of the core 22 to prevent the electromagnetic steel sheets 23 stacked to configure the core 22 from being separated from each other.

The conductive bar 30 is inserted in the slot S. The conductive bar 30 has an elongate shape along the axial direction similarly to the slot S, and is longer than the slot S. Therefore, the conductive bar 30 projects from both the ends in the axial direction of the core 22. One projecting end of the conductive bar 30 is connected to the first shorting ring 41, and the other projecting end is connected to the second shorting ring 42. Accordingly, the conductive bars 30 are coupled and electrically connected to each other by the first and second shorting rings 41 and 42. A material that is electrically conductive and non-magnetic, for example, copper or aluminum is used for the conductive bars 30.

As illustrated in FIGS. 2 and 3, the first shorting ring 41 is connected to one ends of the conductive bars 30, for example, by welding. The second shorting ring 42 is connected to the other ends of the conductive bars 30, for example, by welding. A material that is electrically conductive and non-magnetic, for example, copper or aluminum is used for the first and second shorting rings 41 and 42.

Gaps (cavities) 50 are provided between the core 22 (the teeth T) and the first shorting ring 41 and between the core 22 and the second shorting ring 42, as illustrated in FIG. 3, in order to connect the first and second shorting rings 41 and 42 and the conductive bars 30 to each other by welding or the like. The cavities 50 are provided at both ends in the axial direction of the conductive bars 30 between the conductive bars 30 adjacent to each other in the circumferential direction. The conductive bars 30 are connected to the first or second shorting ring 41 or 42 from the slots S across the cavities 50. The cavities 50 are necessary in manufacturing of the rotor 3, but cause wind noise during a normal operation as described above. This wind noise results in increase of noise of an induction motor.

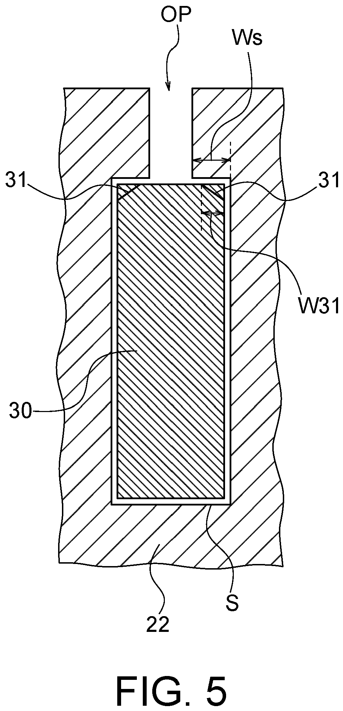

FIG. 5 is a cross-sectional view illustrating a configuration example of the conductive bar 30 according to the first embodiment. FIG. 5 is an enlarged view of a section surrounded by a broken line frame B in FIG. 4. The slot S that extends in the axial direction (the direction perpendicular to the drawing of FIG. 5) is provided in the core 22. The conductive bar 30 that also extends in the axial direction is inserted in the slot S.

As illustrated in FIG. 5, the shape of a section of the slot perpendicular to its longitudinal direction is substantially similar to the shape of a section of the conductive bar 30 perpendicular to its longitudinal direction and slightly larger than the shape of a section of the conductive bar 30 perpendicular to its longitudinal direction. Accordingly, the conductive bar 30 can be inserted into the slot S. In a state where the conductive bar 30 is inserted in the slot S, only a small clearance is formed in the slot S. Therefore, the circumferential width of the conductive bar 30 is substantially the same as or slightly smaller than the circumferential width of the slot S.

The conductive bar 30 inserted in the slot S is fixed in the slot S, for example, by swaging, crimping, or using an adhesive via the slot opening OP.

The conductive bar 30 is chamfered at an end on the outer circumference side of the core 22 to have inclined surfaces 31. The inclined surface 31 is provided in an exposed portion in the cavity 50 in the present embodiment, but is not provided in a portion inserted in the slot S.

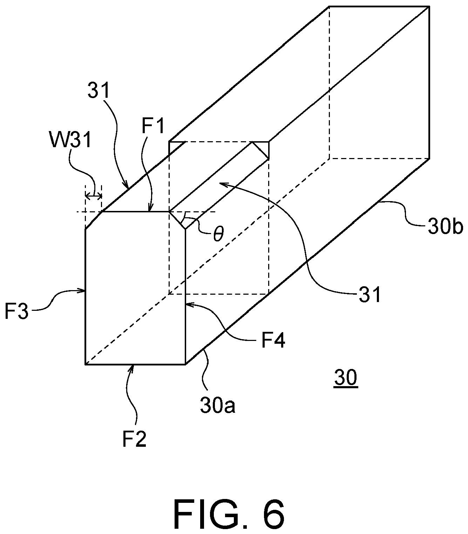

FIG. 6 is a perspective view illustrating a configuration example of one end of the conductive bar 30. The conductive bar 30 has a conductive portion 30a exposed from the cavity 50 and a conductive portion 30b inserted in the slot S. A section of the conductive bar 30 perpendicular to its longitudinal direction (the axial direction) includes a first surface F1 located on the outer circumference side of the rotor 3, a second surface F2 located on the inner circumference side of the rotor 3, and a plurality of side surfaces (third and fourth surfaces) F3 and F4 located between the first surface F1 and the second surface F2. Further, in the conductive portion 30a exposed by the cavity 50, the conductive bar 30 has two inclined surfaces 31 between the first surface F1 and the side surfaces F3 and F4. Each inclined surface 31 is inclined with respect to the first surface F1 and the corresponding side surface F3 or F4. In other words, the inclined surface 31 is inclined with respect to the circumferential direction (the rotating direction) and the radial direction. Accordingly, the section of the conductive bar 30 perpendicular to the axial direction is substantially hexagonal. In the conductive portion 30b hiding in the slot S, the section of the conductive bar 30 perpendicular to the axial direction has a substantially rectangular shape formed by the first surface F1, the second surface F2, and the side surfaces F3 and F4. The inclined surfaces 31 may be flat or curved. Further, the inclined surfaces 31 may have convex portions and concave portions to a certain degree.

By chamfering both ends of the first surface F1 that is on the outer circumferential side of the conductive bar 30, which are exposed in the cavities 50, to form the inclined surfaces 31, wind noise of the conductive bar 30 and/or the cavity 50 caused by rotation of the rotor 3 is reduced. Accordingly, noise of the induction motor 1 can be suppressed.

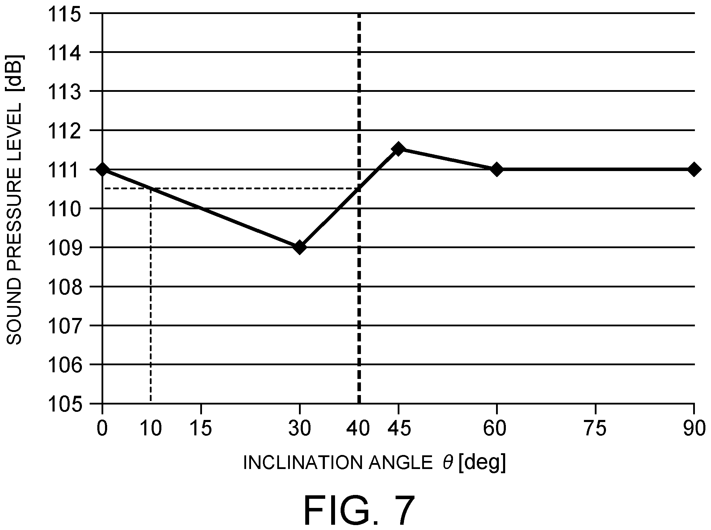

FIG. 7 is a graph illustrating a relation between an inclination angle of the inclined surface 31 and wind noise caused by rotation of the rotor 3. The inclination angle of the inclined surface 31 represents an inclination angle of the inclined surface 31 with respect to the first surface F1 or the rotating direction. That is, the inclination angle of the inclined surface 31 is an angle represented with θ in FIG. 6. The graph illustrates the result of calculating noise generated in the cavity 50 by thermal fluid analysis.

When an inclination angle θ is too small, the inclined surface 31 is substantially flush with the first surface F1 (the circumferential direction or the rotating direction) and therefore wind noise (a sound pressure level) is not reduced so much. On the other hand, when the inclination angle θ is too large, the inclined surface 31 comes close to the side surface F3 or F4 (the radial direction) and therefore wind noise (the sound pressure level) is not reduced either.

In order to reduce the sound pressure level to 115 dB or less, for example, it is preferable that the inclination angle θ is from approximately 10 degrees to approximately 40 degrees. In particular, when the inclination angle θ is around 30 degrees, the sound pressure level is less than 110 dB. Accordingly, it is more preferable that the inclination angle θ is around 30 degrees. Setting the inclination angle of the inclined surface 31 in this manner further reduces wind noise of the conductive bar 30 and/or the cavity 50 caused by rotation of the rotor 3.

Further, it is assumed that the width of the inclined surface 31 in a direction parallel to the first surface F1 is W31 as illustrated in FIG. 5 or 6 and the width from an end of the slot opening OP to a corner of the slot in the direction parallel to the first surface F1 is Ws as illustrated in FIG. 5. In this case, it is preferable that the width W31 is equal to or less than the width Ws. This is because this setting enables the conductive bar 30 to be surely fixed in the slot S when the conductive bar 30 is swaged. A fillet with a radius of approximately 0.5 millimeter is usually formed at an end of the conductive bar 30. Therefore, the width W31 of the inclined surface 31 is 0.5 millimeter or more.

Although the inclined surfaces 31 are formed at both ends of the first surface F1 that is on the outer circumferential side of the conductive bar 30, they may be formed at both ends of the second surface F2 that is on the inner circumferential side of the conductive bar 30.

### (Second embodiment)

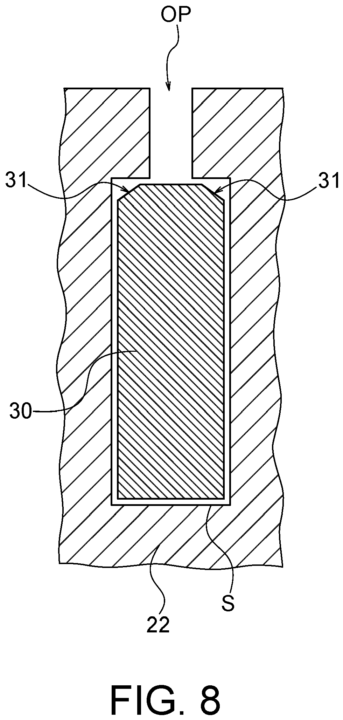

FIG. 8 is a cross-sectional view illustrating a configuration example of the conductive bar 30 according to a second embodiment. In the second embodiment, the conductive bar 30 is entirely chamfered at an end on the outer circumference side of the core 22 to have the inclined surfaces 31. That is, in the second embodiment, the inclined surfaces 31 are provided in both the conductive portion 30a exposed in the cavity 50 and the conductive portion 30b inserted in the slot S.

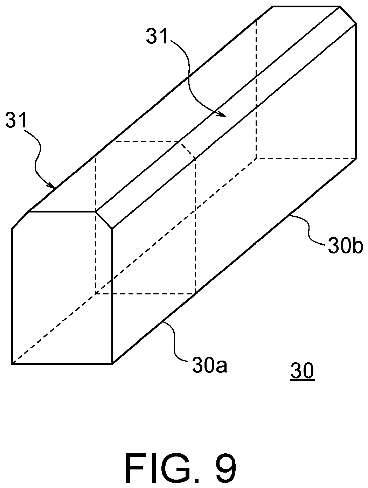

FIG. 9 is a perspective view illustrating a configuration example of one end of the conductive bar 30 according to the second embodiment. With reference to FIG. 9, it is apparent that the inclined surfaces 31 are provided in both the conductive portion 30a and the conductive portion 30b. It suffices that the shape and the size of the inclined surfaces 31 are identical to those of the inclined surfaces 31 in the first embodiment. It suffices that other configurations in the second embodiment are identical to the corresponding configurations in the first embodiment.

The inclined surfaces 31 may be entirely provided along an extending direction of the conductive bar 30 in this manner. The second embodiment can obtain identical advantageous effects to those in the first embodiment. Further, because the inclined surfaces 31 are provided in the entire conductive bar 30, it is possible to process the conductive bar 30 relatively easily. That is, in manufacturing of the conductive bar 30, it is unnecessary to process the conductive portion 30a and the conductive portion 30b in different manners from each other. It suffices to perform the same process. Accordingly, the manufacturing cost is reduced. For example, the conductive bar 30 can be chamfered by extrusion or the like in the longitudinal direction in a manufacturing stage.

### (Third embodiment)

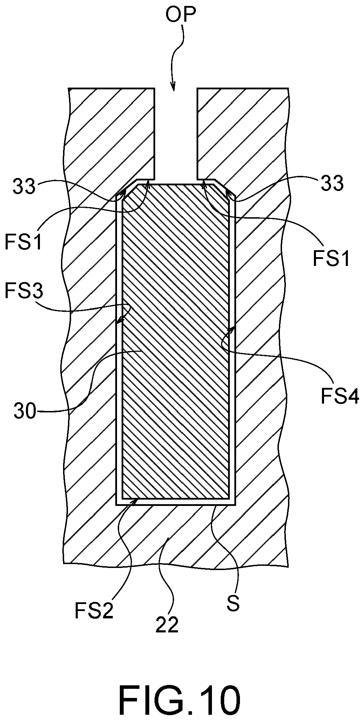

FIG. 10 is a cross-sectional view illustrating a configuration example of the conductive bar 30 and the slot S according to a third embodiment. The conductive bar 30 according to the second embodiment is used in the third embodiment. Further, in the third embodiment, the shape of a section of the slot S perpendicular to its longitudinal direction is substantially similar to the shape of a section of the conductive bar 30 perpendicular to its longitudinal direction and slightly larger than the shape of a section of the conductive bar 30 perpendicular to its longitudinal direction.

For example, the section of the slot S perpendicular to the longitudinal direction (the axial direction) includes a first inner surface FS1 located on the outer circumference side of the rotor 3, a second inner surface FS2 located on the inner circumference side of the rotor 3, and a plurality of inner side surfaces FS3 and FS4 located between the first inner surface FS1 and the second inner surface FS2. Further, the slot S has inner inclined surfaces 33 between the first inner surface FS1 and the inner side surfaces FS3 and FS4. Each inner inclined surface 33 is inclined with respect to the first inner surface FS1 and the corresponding inner side surface FS3 or FS4. In other words, the inner inclined surface 33 is inclined with respect to the circumferential direction (the rotating direction) and the radial direction. Accordingly, the section of the slot S perpendicular to the axial direction is substantially hexagonal. The inner inclined surfaces 33 may be flat or curved. Further, the inner inclined surfaces 33 may have convex portions and concave portions to a certain degree.

The inner inclined surfaces 33 of the slot S are inclined with respect to the first inner surface FS1 at substantially the same angle as the inclination angle θ of the inclined surfaces 31 of the conductive bar 30. That is, it is preferable that the inner inclined surfaces 33 of the slot S are inclined with respect to the first inner surface FS1 (the circumferential direction or the rotating direction) at an angle of approximately 10 degrees to approximately 40 degrees. In particular, when the inclination angle θ of the inclined surfaces 31 is around 30 degrees, it is preferable that the inclination angle of the inner inclined surfaces 33 of the slot S is also around 30 degrees. Accordingly, it is possible to easily insert the conductive bar 30 into the slot S, and an unnecessary gap is not formed between the conductive bar 30 and the slot S. Therefore, the conductive bar 30 can be easily fixed in the slot S.

Other configurations of the third embodiment may be identical to the corresponding configurations of the second embodiment. Therefore, the third embodiment can obtain identical advantageous effects to those in the second embodiment.

Although several embodiments of the present invention have been described above, these embodiments are presented for purposes of illustration only and are not intended to limit the scope of the invention. These embodiments can also be carried out in other various modes, and various types of omissions, replacements, and modifications can be made without departing from the spirit of the invention. These embodiments and modifications thereof are included in the spirit and scope of the invention, and are also included in the invention described in the appended claims and equivalents thereof.

## Claims

1. An induction motor comprising a stator configured to generate a magnetic field and a rotor configured to be driven by the magnetic field from the stator, wherein
the rotor includes
a core provided on a rotating shaft,
a plurality of conductive bars respectively inserted in a plurality of slots provided in the core,
a first ring connected to one ends of the conductive bars, and
a second ring connected to the other ends of the conductive bars,
gaps are formed between the core and the first ring and between the core and the second ring,
the conductive bars are connected to the first or second ring across the gaps from the respective slots,
a section of each conductive bar perpendicular to a longitudinal direction thereof is a polygon having a first surface located on an outer circumference side of the rotor, a second surface located on an inner circumference side of the rotor, a plurality of side surfaces located between the first surface and the second surface, and inclined surfaces that are located between the first surface and the side surfaces at least in the gaps and are inclined with respect to the first surface and the side surfaces,
the inclined surfaces are inclined with respect to the first surface at an angle of 10 degrees to 40 degrees, and
a width of each inclined surface in a direction parallel to the first surface is equal to or less than a width from a slot opening that is provided in an outer circumference side of the core and communicates with one of the slots to a corner of the slot in the direction parallel to the first surface.

2. The induction motor according to claim 1, wherein the width of the inclined surface in the direction parallel to the first surface is 0.5 millimeter or more.

3. The induction motor of according to claim 1 or 2, wherein the inclined surfaces are provided in a portion exposed in the gap, and are not provided in a portion inserted in the slot.

4. The induction motor according to any one of claims 1 to 3, wherein the inclined surfaces are provided in both a portion exposed in the gap and a portion inserted in the slot.

5. The induction motor according to any one of claims 1 to 4, wherein a section of the slot perpendicular to a longitudinal direction thereof is a polygon having a first inner surface located on an outer circumference side of the rotor, a second inner surface located on an inner circumference side of the rotor, a plurality of inner side surfaces located between the first inner surface and the second inner surface, and inner inclined surfaces that are located between the first inner surface and the inner side surfaces and are inclined with respect to the first inner surface and the inner side surfaces.

6. The induction motor according to claim 5, wherein the inner inclined surfaces of the slot are inclined with respect to the first inner surface at substantially the same angle as an inclination angle of the inclined surfaces of the conductive bar with respect to the first surface.

7. The induction motor according to claim 5 or 6, wherein the inner inclined surfaces of the slot are inclined with respect to the first inner surface at an angle of 10 degrees to 40 degrees.

8. The induction motor according to any one of claims 5 to 7, wherein a shape of a section of the slot perpendicular to a longitudinal direction of the slot is substantially similar to a shape of the section of the conductive bar perpendicular to a longitudinal direction of the conductive bar and slightly larger than the shape of the section of the conductive bar perpendicular to the longitudinal direction of the conductive bar.
